# NEW EUROPEAN PATENT SPECIFICATION

(11) **EP 0 629 088 B2**
(45) Date of publication and mention of the opposition decision: **01.10.2008**
(45) Mention of the grant of the patent: 10.05.2000
(21) Application number: 94107933.7
(22) Date of filing: 24.05.1994
(51) Int. Cl.: H04N 7/087

(54) **Improved low cost teletext decoder with memory and page calling keys**
Verbesserter preisgünstiger Teletext-Dekodierer mit Speicher- und Seitenanruftasten
Décodeur de télétexte amélioré à prise réduit, muni de boutons de mémorisation et d'appel de page

(30) Priority: 25.05.1993 IT RM930349
(43) Date of publication of application: 14.12.1994
(73) Proprietor: EDICO S.r.l., 00196 Roma (IT)
(72) Inventor: D'Errico, Federico, I-00186 Roma (IT)
(74) Representative: Eisenführ, Speiser & Partner

(56) References cited:
- EP-A- 0 557 015
- EP-A2- 0 037 077
- EP-A2- 0 145 677
- EP-A2- 0 494 624
- WO-A1-91/06912
- ULFERT WILDHAGEN: 'TELETEXT-MULTI-PAGE-SYSTEM MIT TPU 2700' ELEKTRONIK vol. 34, no. 12, June 1985, MUNCHEN DE, pages 163 - 168, XP002131813
- Grundig TV Apparatuses produced and sold in the years1989,1990,1991,
- Apparatuses with indication CUC 5820 and type indicator ST 70-574 SAT
- Corresponding Service manual with the order nr. 72010-010.30 VK 2230391 printed on the cover page,pages 53-55
- Diagram of videotextdecoder 29504-108.71 vom 5.7.1989

## Description

The present invention relates to a Teletext signals decoder. It is known that in various European countries, from among which Italy, systems are in use (generally known with the English term "teletext", and specifically named "Televideo" in Italy and "Videotext" in Germany) that allow for the transmission, together with the normal television signals, additional information, inserted in the video signal (under the form of coded digital signals) in several of the horizontal lines that are free during the vertical return period.

Such coded signals, upon a command by the user, are detected by an appropriate decoding circuit, known and generally realised by means of monolithic integrated circuits, inserted in the circuits of the television set, so as to allow the display on the television screen of one of the transmitted information pages, containing text or graphics. The number of pages normally transmitted are of several hundred, grouped by subject; the first page (page 100) usually contains the general subject index, and in the successive pages the sub-indexes for each subject, with the relative page numbers. The user has to, each time it is desired to receive a determined page, input a sequence using three numbered keys so as to form the number the three digit number of the searched page; the decoder begins to receive the pages as they are transmitted, one after the other, by the broadcaster; as soon as the page distinguished by the sequence of digits inputted by the user is transmitted, the decoder provides for its acquisition.

The main drawback of teletext is the difficulty of the selection mechanism and the amount of time necessary for the acquisition; numerous systems have been proposed for reducing such drawback (TOP, FLOF, TOPLESS).

In the TOP system the grouping of the pages is organised according to a structure of two levels (blocks and groups).

The command device, generally a remote control, is equipped with four supplement keys, each coloured in a different manner, which allow for the access, respectively, to the next page of the group, to the first page of the next group (typically containing the relative index), to the first page of the successive block (typically containing the relative index), to the previous page selected. In other implementations the fourth access key provides access to the previous page of the group.

Decoders of the type TOP improve the ease of use of Teletext, but also increase the costs of the decoder.

On the other hand the decoders without TOP have an ease of use being particularly poor.

To exemplify, we may use as an example the Televideo service of RAI, and in particular its journalistic section (Testata Televideo). If the latest news is excluded, the news is divided into various subsections, and in particular:
- internal (page 104),
- foreign (page 120),
- society (page 135),
- culture (page 150),
- sport (page 200).

The typical method of consulting such subsections, for those who have a normal television without TOP or similar systems, is considered to be the following.

A subsection is consulted one at a time, starting with the subsection "internal", the index page of which is memorised in a memory. It may be that interest is not concentrated on a single news section, for which the user would wish to look over all the pages. Something of which being of extreme ease if the television has a memory of at least 4 pages and a "+" key in that by pressing the mentioned key the following page is immediately acquired (it is known to be annoying however to call a page by inputting its three digit number).

Such operation takes place without any problems until an empty page is encountered. In such a case the decoder initiates an endless search for such a page that does not exist.

The user at this point may decide to press once again the "+" key, in the hope that the successive page exists. It may however be so that such page does not exist, as the subsection "internal" may be finished, in such case it would be opportune to pass to the index of the next subsection of interest, or there may be two consecutive empty pages. In reality the easiest operation would be that of turning back to and consulting the index, for identifying which is the next existing page, or to realise that the last page of the subsection has been reached.

For doing this the user may input the relative three digit number, this being an operation, as previously said, that results in being rather annoying. Moreover if, as opposed to the cited example, the user is "flipping through" a subsection different than the "internal", he is less lightly to remember the relative page number: in this case the user would have to return as far back as the general index on page 100.

With a normal decoder the user is not able to do more. A similar inconvenience is witnessed by a user who does not wish to flip through all the pages of a subsection, but wishes to view some only. After having viewed all the pages of interest, the user will almost have certainly forgotten the page number of the successive page of interest, therefore it would be necessary to go back to the index of the subsection, of which it is hoped that the number has not been forgotten, otherwise it will be necessary to go back to the general index.

These inconveniences could be overcome by inserting in an intelligent manner the references at the bottom of the page. The importance of such references, however, is often overlooked by the editors, that often insert page numbers which all users already know (typically the case, with Televideo RAI, latest news), instead of inserting references that would be useful for the user.

Whatever the case the reference at the bottom of the page takes up space from the news itself.

It is known from EP-A-0037077 a method for reducing the waiting time by the displaying of text and graphics pages wherein on the transmission side at least a part of the text or graphic information is added on further associated pages and on the reception side the additional information of the displayed page are memorised.

It is also known from EP-A-0494624 a teletext transmission receiver comprising additional means allowing the searching and memorisation of the groups index page to which the chosen page belongs.

The aim of the present invention is that of indicating a teletext signals circuit receiver that overcomes the cited drawbacks.

For allowing such aims the present invention relates to a Teletext signals decoder, having the characteristics described in the attached claim 1.

Further aims and advantages of the present invention will result in being clear from the detailed description and annexed drawings that follow, supplied purely as an explanatory and non-limiting example, wherein:
figure 1 schematically represents a part of the electrical circuit of a teletext transmissions receiver;
figure 2 schematically represents a significant part of the logic circuit of the control unit of figure 1.

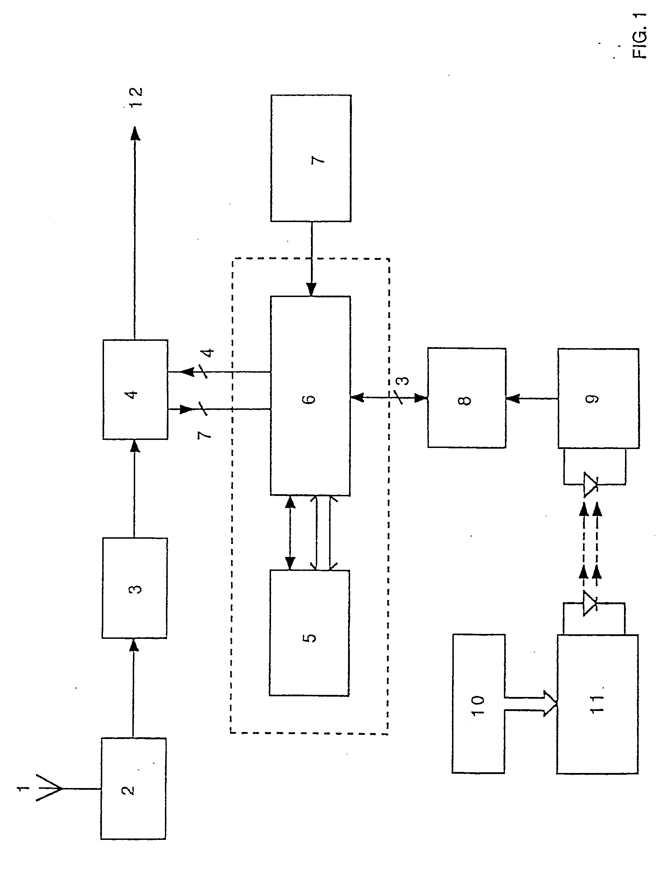

In figure 1 reference number 1 indicates a receiving antenna, connected to a television receiver for receiving the transmissions of television signals, containing the teletext signals. Said antenna is connected to a traditional tuner, indicated with reference number 2; to said tuner an amplifier of intermediate frequency signals follows, also conventional, comprising a video detector, indicated with number 3.

The amplifier 3 supplies in output the composite video signal and is connected to an amplifying circuit and video signal processor indicated with reference number 4; the processing circuit 4 can be for instance of the type VCU 2133 by ITT, which also carries out the analogic to digital conversion and the digital to analogic reconversion of the signal; at the output (reference number 12) of the circuit 4 three signals R, G, B (red, green, blue) are available for displaying the image (coloured television screen, not illustrated in the figure).

The processing circuit 4 is connected, by way of two multiwire connections, to a teletext signals decoding circuit, indicated with reference number 6.

The decoding circuit 6 comprises:
- a data acquisition circuit, that receives the digitalised video input signal, coming from circuit 4;
- a RAM memory that serves as a buffer of the teletext page to be displayed;
- a control unit of the external memory of four or eight pages indicated with number 5;
- a character generator and a control circuit of the display;
- a timing unit, that receives the clock signal from the clock circuit generator, indicated with reference number 7, that can be for instance of the type MCU 2632 by ITT;
- an interface for the bus coming from the central control unit 8.

The acquisition of teletext data starts in the 7th television line and terminates in line 22, the teletext information is synchronised and identified; a comparator, preselects the pages whose numbers have been requested by the control unit 8 and loads them in the memory 5; the internal memory is used as a buffer.

The display begins at line 48 and terminates at line 286; the decoder selects one of the eight pages in the memory for display, the words of 8 bit (characters) are transformed in a matrix of 6 x 10 points by the character generator and are displayed on 24 lines of 40 characters each.

The circuit 6 receives commands from unit 8 by way of an appropriate bus.

The external memory 5 of 32 or 64 Kbit is organised in 4 or 8 sectors of 8 Kbit each; every sector memorises a page and is organised in 25 lines of 40 bytes each, plus a line of 24 bytes; lines 0-23 represent the 24 lines of the teletext page to be viewed; the 25th line of every sector is used for the control information of the relative sector, while lines 24 of sector zero and one respectively contain general; control information and the rolling header.

The central control unit, indicated with reference number 8, may be for example of the type CCU 2030 by ITT, or another logic control circuit comprising a similar microprocessor and a suitable program of operative instructions.

Said central control unit, apart from circuit 6, is connected to an amplifier circuit, indicated with reference number 9, that works as an infrared rays signal receiver, coming from a remote control device, indicated with reference number 11; the latter in turn is connected to a command keyboard, indicated with reference number 10.

The commands given by the user, by way of the keyboard 10, through the transmitter 11 and receiver 9, reach the control unit 8, that, provides to decode such commands and to supply the appropriate control signals to the circuit 6.

According to the invention the memorising of an index page, whenever viewed, is automatically carried out by the decoder. The central control unit 8 provides for analysing the displayed page, for instance by utilising the procedure described in the European patent application N° EP 055 701 A, published 25.08.93 (identifying all sequences of 3 decimal digits constituting a number from 000 to 899 and assuring that the pages in which at least five of such numbers are contained are index pages), and, that whenever an index page is being dealt with, to automatically memorise it in the established cell of the memory 5; thus it is possible to eliminate the memory key M, and it avoids the need of the user to call an index page that he has forgotten to memorise.

According to an embodiment of the invention, it is proposed that the remote control unit be equipped with an additional key, depressing such the user instructs the decoder to memorise the current page being viewed; by way of a second additional key, the user can recall the page that has been previously stored in the memory.

The user would use these two keys when he wishes to memorise a page, that he thinks he may recall later. For this purpose it is considered that the modification to the remote control unit proposed by embodiment of the invention constitutes a valid aid in numerous occasions.

Also considering the low cost of the actual modification, and its adaptability even to decoders with only four pages of memory, it certainly represents an advantageous solution.

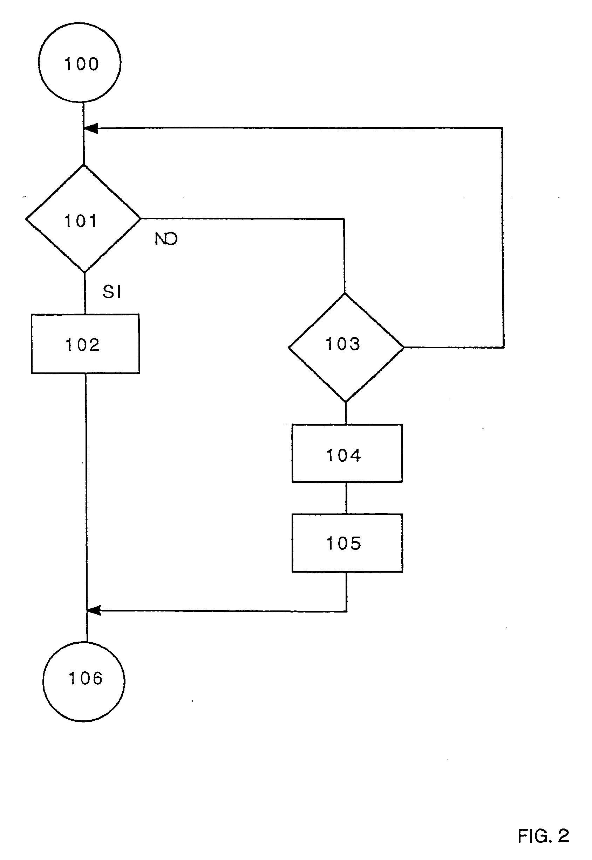

Figure 2 schematically represents a significant part of the central control unit 8, that clarified the functioning of the operations.

Block 100 is the starting block of the operation of selecting and of memorising a page; control passes to the successive block 101.

Block 101 is a control block; it controls whether the memorising key (from herein on called M) has been pressed on the command device (remote control unit); in the affirmative case control passes to block 102; in the negative case control passes to block 103 (in all the control blocks the lower output is the YES output; the lateral output is the NO output).

Block 102 provides for memorising in a given cell of the memory 5 (for example the first cell) the current page being viewed; control then passes to the successive block 106.

Block 103 is a control block; it controls whether the recalling key (from herein on called R) has been pressed on the command device (remote control unit); in the affirmative case control passes to block 104; in the negative case control passes back to block 101.

Block 104 provides for recalling from the established cell of the memory (first cell) the page previously memorised; control passes to the successive block 105.

Block 105 provides for viewing the page recalled from the memory by the previous block 104; control then passes to the successive block 106. Block 106 is the end of operations block; control can pass back to the starting block 100 or to another operative block similar to the control circuit.

The characteristics of the decoder subject of the present invention result in being clear from the description of the example. From the given description the advantages of the decoder subject of the present invention also result in being clear.

It is clear that, remaining with the principles of the invention, numerous variants are possible to the characteristics of the decoder described as an example, without for this departing from the scope of the invention as defined in the claims, as it is also clear that the apparatus used in connection with the described method in a practical realisation of the invention could be, varied in the specific characteristics, and that the components used could be substituted with technically equivalent elements.

## Claims

1. Teletext signals decoder, comprising first means (M, 102) for memorising a displayed index page, and second means (R, 104) for successively recalling from the memory said page previously memorised, even if it is not the last displayed, **characterised in that** said first means for memorising a displayed index page comprise a logic control circuit (8) that provides to analyse the page currently displayed and to automatically memorise it every time that it is an index page.

2. Teletext signals decoder, according to claim 1, **characterised in that** said second means for recalling a page previously memorised comprise a key or button (R).

3. Teletext signals decoder, according to claim 2_{.} **characterised in that** the decoder comprises control means (103) which determine when said key or button (R) has been pressed and for activating recalling means (104) and display means (104) of the page previously memorised.

4. Receiver of television signals utilising a teletext signals decoder according to one or more of the previous claims.

## Patentansprüche

1. Teletext-Signaldekoder mit
einem ersten Mittel (M, 102) zum Speichern einer angezeigten Indexseite, und einem zweiten Mittel (R, 104) zum aufeinanderfolgenden Wiederaufrufen der vorab gespeicherten Seite aus einem Speicher, selbst wenn sie nicht zuletzt dargestellt wurde,
**dadurch gekennzeichnet, dass** das erste Mittel zum Speichern einer angezeigten Indexseite eine logische Steuerschaltung (8) umfasst, die zur Analyse der aktuell angezeigten Seite und zum automatischen Speichern der Seite jedesmal dient, wenn sie eine Indexseite ist.

2. Teletext-Signaldekoder nach Anspruch 1,
**dadurch gekennzeichnet, dass** das zweite Mittel zum Wiederaufrufen einer vorab gespeicherten Seite eine Taste oder einen Knopf (R) aufweist.

3. Teletext-Signaldekoder nach Anspruch 2,
**dadurch gekennzeichnet, dass** der Dekoder ein Steuermittel (103) zum Bestimmen, ob die Taste oder der Knopf (R) betätigt wurde, und zum Aktivieren eines Wiederaufrufmittels (104) und eines Anzeigemittels (104) der vorab gespeicherten Seite aufweist.

4. Empfänger von Fernsehsignalen,
der einen Teletext-Signaldekoder nach einem oder mehreren der vorherigen Ansprüche verwendet.

## Revendications

1. Décodeur de signaux télétexte, comprenant des premiers moyens (M, 102) destinés à mémoriser une page d'index affichée, et des deuxièmes moyens (R, 104) pour rappeler successivement de la mémoire ladite page précédemment mémorisée, même s'il ne s'agit pas de la dernière page affichée, **caractérisé en ce que** lesdits premiers moyens destinés à mémoriser une page d'index affichée comprennent un circuit de commande logique (8) qui prévoit d'analyser la page actuellement affichée et de la mémoriser automatiquement chaque fois qu'il s'agit d'une page d'index.

2. Décodeur de signaux télétexte, selon la revendication 1, **caractérisé en ce que** lesdits premiers moyens destinés à mémoriser une page d'index affichée comprennent une touche ou un bouton (R).

3. Décodeur de signaux télétexte, selon la revendication 2, **caractérisé en ce que** le décodeur comprend des moyens de commande (103) qui déterminent le moment où ladite touche ou ledit bouton (R) a été enfoncé(e) et destinés à activer des moyens de rappel (104) et des moyens d'affichage (104) de la page précédemment mémorisée.

4. Récepteur de signaux de télévision utilisant un décodeur de signaux télétexte, selon l'une ou plusieurs des revendications précédentes.
